# EUROPÄISCHE PATENTSCHRIFT

(11) **EP 1 185 806 B1**
(45) Veröffentlichungstag und Bekanntmachung des Hinweises auf die Patenterteilung: **23.10.2002**
(21) Anmeldenummer: 00943782.3
(22) Anmeldetag: 08.06.2000
(51) Int. Cl.: F16H 57/02

(54) **ZAHNRADLAGERUNG IN GETRIEBEN**
GEARWHEEL BEARING IN GEARBOXES
ROULEMENT DE ROUE D'ENGRENAGE DANS DES BOITES DE VITESSES

(30) Priorität: 15.06.1999 DE 19927080
(43) Veröffentlichungstag der Anmeldung: 13.03.2002
(73) Patentinhaber: ZF FRIEDRICHSHAFEN Aktiengesellschaft, 88038 Friedrichshafen (DE)
(72) Erfinder: FÜHRER, Gerhard, D-88048 Friedrichshafen (DE); LANZ, Hermann, D-88699 Frickingen (DE); STAUBER, Roland, D-88046 Friedrichshafen (DE)
(86) Internationale Anmeldenummer: EP0005283
(87) Internationale Veröffentlichungsnummer: WO00077424

(56) Entgegenhaltungen:
- EP-A- 0 628 749
- EP-A- 0 636 813
- DE-A- 19 633 279
- DE-A- 19 633 282

## Beschreibung

Die Erfindung betrifft in einem Fahrzeuggetriebe die Lagerung eines Zahnrades nach dem Oberbegriff von Anspruch 1.

Moderne, leistungsstarke Fahrzeuggetriebe weisen meist eine Hauptgetriebegruppe mit einem mehrgängigen Grundgetriebe und einer integrierten, vorgeschalteten Splitgruppe und eine nachgeschaltete Hilfsgetriebegruppe auf. Sie weisen überwiegend in einem Getriebegehäuse als eine erste Welle eine Eingangswelle und als eine zweite Welle eine Zentralwelle oder Hauptwelle auf, die auch die Ausgangswelle sein kann, sowie eine oder mehrere Vorgelegewellen. Die Eingangswelle und die Hauptwelle liegen dabei im wesentlichen konzentrisch zueinander.

Mit Rücksicht auf die Laufeigenschaften und die Laufruhe können derartige Getriebe mit Schrägverzahnung, zumindest für den Vorwärtsfahrbereich, ausgelegt sein. Die axialen Kräften aus der Schrägverzahnung müssen mit einer axialen Lagerung aufgefangen und auf das Gehäuse abgeleitet werden.

Getriebe in den beschriebenen Bauweisen können mit einer Vorgelegewelle oder mit mehreren Vorgelegewellen ausgestattet sein.

Bei Getrieben mit Leistungsteilung auf zwei Vorgelegewellen weist die Hauptgetriebegruppe zwei im wesentlichen axial hintereinander angeordnete Wellen auf, von denen die eine Welle, die entweder die Eingangswelle oder die Hauptwelle des Hauptgetriebes ist, radial und axial fest gelagert, während die jeweils andere Welle wegen des notwendigen Lastausgleichs schwimmend, d. h. radial beweglich gelagert ist. Dabei ist zu beachten, daß eine leichtgängige radiale Schwenkbewegung der schwimmenden Welle möglich ist.

Bei Getrieben mit zwei Vorgelegewellen kann der Lastausgleich vorzugsweise so gestaltet sein, daß die Eingangswelle starr zum Gehäuse, die Vorgelegewellen starr zum Gehäuse und die Hauptwelle schwimmend in den Zahnrädern, welche sich im Kraftfluß befinden, gelagert ist.

Bei Getrieben ohne Leistungsteilung sind beide Wellen radial und axial im Getriebegehäuse gelagert, wobei die eine Welle einerseits in einem Lager innerhalb der anderen Zentralwelle gelagert ist.

Die bekannten Stufenwechselgetrieben für Nutzfahrzeuge weisen einen drei- oder vierstufigen Haupt- oder Grundgetriebeteil auf und ein dem Hauptgetriebe vorgeschaltetes Splittergetriebe als Hilfsgetriebe, das die Gangstufenzahl des Hauptgetriebes verdoppelt, indem es die Übersetzungsstufen des Hauptgetriebes aufsplittet.
Die Eingangswelle des Getriebes, die in das als Splittergetriebe ausgebildete Hilfsgetriebe hineinreicht, trägt ein erstes, gegenüber der Eingangswelle frei drehbares Zahnrad, das mit einem Zahnrad der Vorgelegewelle des Hauptgetriebes in Eingriff steht. An ihrem dem Hauptgetriebe zugewandten axialen Ende trägt die Eingangswelle eine Schalteinrichtung, die es ermöglicht, die Eingangswelle entweder mit dem genannten lose drehenden Zahnrad oder mit einem auf der Hauptwelle des Hauptgetriebes frei drehbar angeordneten Zahnrad zu einer Drehmomentübertragung drehfest zu verbinden. Die erste Zahnradpaarung mit dem losen Zahnrad auf der Eingangswelle und dem damit kämmenden Zahnrad auf der Vorgelegewelle wird auch häufig als erste Konstante oder Konstante I bezeichnet, während die zweite Zahnradpaarung, bestehend aus dem ersten auf der Hauptwelle angeordneten losen Zahnrad und dem damit kämmenden Zahnrad auf der Vorgelegewelle als zweite Konstante oder Konstante II bezeichnet wird. Mit Hilfe der Schalteinrichtung wird entweder die Konstante I oder die Konstante II in die Drehmomentenübertragung eingeschaltet.

Aus der DE 196 33 279 A1 der Anmelderin, die als nächstliegender Stand des Technik angesehen wird, ist nun die Lagerung des Zahnrades der zweiten Konstante bei einem Getriebe mit Leistungsteilung auf zwei Vorgelegewellen bekannt. Dort wird das Zahnrad radial schwimmend auf einer Scheibe gelagert, die zwischen zwei axial wirkenden Rollenlagern angeordnet ist. Zusätzlich ist ein weiteres axial wirkendes Rollenlager zwischen der Getriebeeingangswelle und der Hauptwelle des Getriebes vorgesehen.

Die bestehenden Lagerungen weisen jedoch Nachteile auf, die zu verbessern sind.

Der Erfindung liegt die Aufgabe zugrunde, die Nachteile in der bestehenden Lagerung zu beseitigen.

Die Aufgabe wird gelöst mit den Merkmalen des Anspruchs 1. Ausgestaltungen sind Gegenstand von Unteransprüchen.

Im Gegensatz zu existierenden Lösungen nach Stand der Technik, bei denen im Bereich zwischen der Eingangswelle eines Getriebes und der Hauptwelle angeordnete Zahnräder entweder auf der Eingangswelle oder auf der Hauptwelle radial gelagert sind, wird nach der Erfindung vorgeschlagen, bei einem Fahrzeuggetriebe mit zwei in einem Getriebegehäuse angeordneten Vorgelegewellen zur Leistungsteilung, mit einer Eingangswelle und einer koaxial zur Eingangswelle angeordneten Hauptwelle und mit einem im Bereich zwischen der Eingangswelle und der Hauptwelle angeordneten Zahnrad, das Zahnrad axial in einer Lagerung zwischen der Eingangswelle und der Hauptwelle zu lagern und radial ausschließlich zwischen den Zahnrädern der beiden Vorgelegewellen zu lagern.

Die Lagerung stellt die ausschließliche axiale Lagerung zwischen der Eingangswelle und der Hauptwelle dar. In einer vorteilhaften Ausgestaltung besteht die axiale Lagerung aus zwei axial wirkenden Rollenlagern, die beidseitig an einem Zapfen des Zahnrades anliegen. Eine weitere vorteilhafte Gestaltung zeigt das Zahnrad als zur Aufnahme der aus der Verzahnung der Hauptwelle resultierende Axialkräfte und zur Weiterleitung der Axialkräfte auf die Eingangswelle und das Getriebegehäuse vorgesehen.

Aufgrund der erfindungsgemäßen Anordnung sind anstatt bisheriger drei Axiallager nur noch zwei Lager erforderlich. Je nach Verzahnungsauslegung und Lastkollektiv verändern sich die Lagerbeanspruchungen und damit die Lebensdauer. Wird die erwartete Schädigung der Lager geringer, so kann bei der Konstruktion auf kleinere Lagergrößen zurückgegriffen werden.
Durch den Entfall der radialen Lagerung des Zahnrades auf der Hauptwelle ist es nicht länger erforderlich, die Länge der Hauptwelle so zu bemessen, daß sie axial bis in den Bereich zwischen Eingangswelle und Hauptwelle reicht. Dadurch kann eine Materialeinsparung im Bereich der Hauptwelle vorgenommen werden.

Die Erfindung wird anhand einer Zeichnung näher beschrieben.

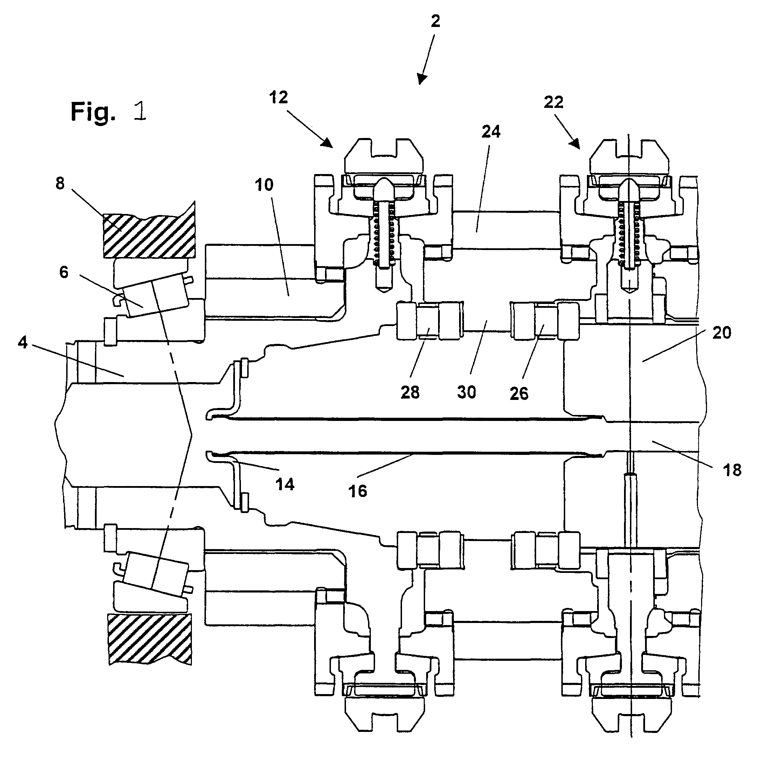

Die einzige Figur zeigt einen Ausschnitt aus einem Getriebe 2 eines Fahrzeugs mit einer Eingangswelle 4, die in einer Lagerung 6 in einem Getriebegehäuse 8 gelagert ist. Auf der Eingangswelle 4 ist das Zahnrad 10 der ersten Konstante drehbar gelagert und kann über die Synchronisiereinrichtung 12 in bekannter Weise mit der Eingangswelle 4 drehfest verbunden werden. Radial innerhalb der Eingangswelle 4 ist eine Scheibe 14 vorgesehen, von der aus ein Rohr 16 zur Ölversorgung in eine Öffnung 18 innerhalb einer Hauptwelle 20 des Getriebes 2 ragt. Auf der Hauptwelle 20 ist eine Synchronisiereinrichtung 22 angeordnet, mit der das Zahnrad 24 der zweiten Konstanten drehfest mit der Hauptwelle verbunden werden kann. Das Zahnrad 24 ist frei drehbar zwischen der Eingangswelle 4 und der Hauptwelle 20 vorgesehen, wo es auf zwei axial wirkenden Rollenlagern 26 und 28 gelagert ist.
Die aus der Schrägverzahnung von auf der Hauptwelle 20 gelagerten und hier nicht gezeigten Zahnrädern resultierende Axialkräfte werden von der Hauptwelle 20 zunächst auf das Rollenlager 26 und auf den Zapfen 30 am Zahnrad 24 übertragen. Das Rollenlager 28 überträgt dann die Axialkräfte auf die Eingangswelle 4 und über die Lagerung 6 auf das Getriebegehäuse 8.
Mit der Synchronisiereinrichtung 12 kann das Zahnrad 24 zur Bildung der zweiten Konstante mit der Eingangswelle 4 drehfest verbunden werden. Eine direkte Drehmomentverbindung zwischen der Eingangswelle 4 und der Hauptwelle 20 zur Bildung eines Direktantriebes wird ebenfalls über das Zahnrad 24 hergestellt. Dazu wird die Synchronisiereinrichtung 12 so geschaltet, hier in der Zeichnungsebene nach rechts, daß die Eingangswelle 4 mit dem Zahnrad 24 drehfest verbunden ist. Zusätzlich wird die Synchronisiereinrichtung 22 so geschaltet, hier in der Zeichnungsebene nach links, daß die Hauptwelle 20 ebenfalls mit dem Zahnrad 24 drehfest verbunden ist.

Die Lagerung des Zahnrades 24 erfolgt in axialer Richtung über die beiden Rollenlager 26 und 28 zwischen der Eingangswelle 4 und der Hauptwelle 20. Eine radiale Lagerung des Zahnrades 24 entweder auf der Eingangswelle 4 oder auf der Hauptwelle 20 erfolgt nicht. Er findet auch keine schwimmende radiale Lagerung auf einer der beiden Wellen 4 oder 20 statt.

### Bezugszeichen

- 2: Getriebe
- 4: Eingangswelle
- 6: Lagerung
- 8: Getriebegehäuse
- 10: Zahnrad
- 12: Synchronisiereinrichtung
- 14: Scheibe
- 16: Rohr
- 18: Öffnung
- 20: Hauptwelle
- 22: Synchronisiereinrichtung
- 24: Zahnrad
- 26: Rollenlager
- 28: Rollenlager
- 30: Zapfen

## Patentansprüche

1. Fahrzeuggetriebe (2) mit zwei in einem Getriebegehäuse (8) angeordneten Vorgelegewellen zur Leistungsteilung, mit einer Eingangswelle (4) und einer koaxial zur Eingangswelle (4) angeordneten Hauptwelle (20) und mit einem im Bereich zwischen der Eingangswelle (4) und der Hauptwelle (20) angeordneten Zahnrad (24), das axial in einer Lagerung (26, 28) zwischen der Eingangswelle (4) und der Hauptwelle (20) gelagert ist und radial ausschließlich zwischen den Zahnrädern der beiden Vorgelegewellen gelagert ist, **dadurch gekennzeichnet, daß** die Lagerung (26, 28) die ausschließliche axiale Lagerung zwischen Eingangswelle (4) und Hauptwelle (20) darstellt.

2. Fahrzeuggetriebe (2) nach Anspruch 1, **dadurch gekennzeichnet, daß** die axiale Lagerung aus zwei axial wirkenden Rollenlagern (26, 28) besteht, die beidseitig an einem Zapfen (30) des Zahnrades (24) anliegen.

3. Fahrzeuggetriebe (2) nach einem der Ansprüche 1 oder 2, **dadurch gekennzeichnet, daß** das Zahnrad (24) zur Aufnahme der aus der Verzahnung der Hauptwelle (20) resultierende Axialkräfte und zur Weiterleitung der Axialkräfte auf die Eingangswelle (4) und das Getriebegehäuse (8) vorgesehen ist.

## Claims

1. Vehicle transmission (2) having two layshafts for power splitting disposed in a transmission housing (8), having an input shaft (4) and a main shaft (20) disposed coaxially with the input shaft (4), and having a gear wheel (24), which is disposed in the region between the input shaft (4) and the main shaft (20) and is mounted axially in a bearing arrangement (26, 28) between the input shaft (4) and the main shaft (20) and radially exclusively between the gear wheels of the two layshafts, **characterized in that** the bearing arrangement (26, 28) is the exclusive axial bearing arrangement between input shaft (4) and main shaft (20).

2. Vehicle transmission (2) according to claim 1, **characterized in that** the axial bearing arrangement comprises two axially effective roller bearings (26, 28), which lie against both sides of a pivot (30) of the gear wheel (24).

3. Vehicle transmission (2) according to one of claims 1 or 2, **characterized in that** the gear wheel (24) is provided for taking up the axial forces, which result from the gearing of the main shaft (20), and for transmitting the axial forces to the input shaft (4) and the transmission housing (8).

## Revendications

1. Boîte de vitesses d'un véhicule automobile (2) dotée de deux arbres de renvoi disposés dans un carter de boîte de vitesses (8) pour la répartition de la puissance, et dotée d'un arbre d'entrée (4) et d'un arbre principal (20), celui-ci étant disposé coaxialement par rapport à l'arbre d'entrée (4), et doté d'un engrenage (24) disposé dans la zone entre l'arbre d'entrée (4) et l'arbre principal (20), celui-ci étant logé axialement dans un logement (26, 28) prévu entre l'arbre d'entrée (4) et l'arbre principal (20), celui-ci étant logé radialement seulement entre les engrenages des deux arbres de renvoi, **caractérisée en ce que** le logement (26, 28) représente uniquement le logement axial entre l'arbre d'entrée (4) et l'arbre principal (20).

2. Boîte de vitesses d'un véhicule automobile (2) selon la revendication 1, **caractérisée en ce que** le logement axial est conçu de deux roulements à rouleaux (26, 28) à effet axial portant des deux côtés sur le tourillon (30) de l'engrenage (24).

3. Boîte de vitesses d'un véhicule automobile (2) selon une des revendications 1 ou 2, **caractérisée en ce que** l'engrenage (24) est prévu pour l'absorption des forces axiales résultant du fonctionnement de la denture de l'arbre principal (20) et pour la transmission des forces axiales à l'arbre d'entrée (4) et au carter de la boîte de vitesses (8).
